(19) **Europäisches Patentamt / European Patent Office / Office européen des brevets**

(11) **EP 4 706 804 A1**

(12) **EUROPEAN PATENT APPLICATION**
published in accordance with Art. 153(4) EPC

(43) Date of publication:
**11.03.2026 Bulletin 2026/11**

(21) Application number: **24815352.0**

(22) Date of filing: **23.05.2024**

(51) International Patent Classification (IPC):
**B01D 53/86** (2006.01)

(52) Cooperative Patent Classification (CPC):
**B01D 53/86; Y02C 20/10**

(86) International application number:
**PCT/JP2024/018966**

(87) International publication number:
**WO 2024/247868 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.05.2023 JP 2023090194**

(71) Applicant: **Mitsubishi Heavy Industries, Ltd.**
**Tokyo 100-8332 (JP)**

(72) Inventors:
- **NOCHI, Katsumi**
  **Tokyo 100-8332 (JP)**
- **TAKEDA, Masayuki**
  **Takasago-shi, Hyogo 676-8686 (JP)**
- **KAKO, Hiroshi**
  **Tokyo 100-8332 (JP)**

(74) Representative: **Studio Torta S.p.A.**
**Via Viotti, 9**
**10121 Torino (IT)**

(54) **EXHAUST GAS TREATMENT DEVICE, AND EXHAUST GAS TREATMENT METHOD**

(57)  An exhaust gas treatment device is an exhaust gas treatment device for treating exhaust gas generated by combusting fuel, including: a first denitration catalyst for reducing a nitrogen oxide in the exhaust gas; and at least one catalyst unit each including an ammonia decomposition catalyst for decomposing ammonia in the exhaust gas, the ammonia decomposition catalyst being disposed downstream of the first denitration catalyst in an exhaust gas flow, and a second denitration catalyst for reducing the nitrogen oxide in the exhaust gas, the second denitration catalyst being disposed downstream of the ammonia decomposition catalyst in the exhaust gas flow, wherein a ratio ($C_{NH3\_FSCR}/C_{N2O\_SYS}$) of an ammonia concentration ($C_{NH3\_FSCR}$) at an outlet of the first denitration catalyst to a dinitrogen monoxide concentration ($C_{N2O\_SYS}$) at an outlet of the at least one catalyst unit is not less than 10.0.

**FIG. 2**

**Description**

TECHNICAL FIELD

The present disclosure relates to an exhaust gas treatment device and an exhaust gas treatment method.
This application claims priority to Japanese Patent Application No. P2023-090194 filed with the Japan Patent Office on May 31, 2023, the contents of which are incorporated herein by reference.

BACKGROUND

Denitration catalysts may be used to reduce nitrogen oxides (NOx) contained in combustion exhaust gas from combustion facilities. When treating exhaust gas, ammonia is usually added to the exhaust gas upstream of the denitration catalyst. Nitrogen oxides in the exhaust gas react with the ammonia as a reducing agent under the presence of the denitration catalyst and are decomposed into harmless substances (nitrogen and water).
Moreover, an ammonia decomposition catalyst may be used to reduce unreacted ammonia in the exhaust gas having passed through the denitration catalyst. By contacting the exhaust gas containing ammonia having passed through the denitration catalyst with the ammonia decomposition catalyst, the ammonia is oxidatively decomposed and nitrogen is mainly produced.
Patent Documents 1 and 2 disclose that exhaust gas containing nitrogen oxides is treated using a reactor in which a denitration catalyst layer is disposed upstream of the exhaust gas flow and an ammonia catalyst layer is disposed downstream therefrom.

Citation List

Patent Literature

Patent Document 1: JP 3462580 B2

Patent Document 2: JP 2000-093749 A

SUMMARY

Technical Problem

Incidentally, the oxidative decomposition reaction of ammonia in an ammonia decomposition catalyst usually produces a dinitrogen monoxide ($N_2O$), which is a type of greenhouse gas, as a by-product, in addition to nitrogen mainly being produced. In particular, when exhaust gas having a high nitrogen oxide concentration (e.g., combustion exhaust gas of fuel containing ammonia) is to be treated, a large amount of ammonia as a reducing agent is added to sufficiently reduce the nitrogen oxide in the exhaust gas, and therefore this tends to increase the amount of the dinitrogen monoxide to be produced, which is a by-product of the oxidative decomposition reaction of ammonia.
In view of the above-described circumstances, an object of at least one embodiment of the present invention is to provide an exhaust gas treatment device and an exhaust gas treatment method capable of reducing nitrogen oxides and ammonia in exhaust gas, while effectively suppressing an amount of dinitrogen monoxides to be produced.

Solution to Problem

An exhaust gas treatment device according to at least one embodiment of the present invention is an exhaust gas treatment device for treating exhaust gas generated by combusting fuel, the exhaust gas treatment device including:

a first denitration catalyst for reducing a nitrogen oxide in the exhaust gas; and
at least one catalyst unit each including an ammonia decomposition catalyst for decomposing ammonia in the exhaust gas, the ammonia decomposition catalyst being disposed downstream of the first denitration catalyst in an exhaust gas flow, and a second denitration catalyst for reducing the nitrogen oxide in the exhaust gas, the second denitration catalyst being disposed downstream of the ammonia decomposition catalyst in the exhaust gas flow, wherein
a ratio ($C_{NH3\_FSCR}/C_{N2O\_SYS}$) of an ammonia concentration ($C_{NH3\_FSCR}$) at an outlet of the first denitration catalyst to a dinitrogen monoxide concentration ($C_{N2O\_SYS}$) at an outlet of the at least one catalyst unit is not less than 10.0.

Moreover, an exhaust gas treatment device according to at least one embodiment of the present invention is an exhaust gas treatment device for treating exhaust gas generated by combusting fuel, the exhaust gas treatment device including:

a first denitration catalyst for reducing a nitrogen oxide in the exhaust gas; and
at least one catalyst unit each including an ammonia decomposition catalyst for decomposing ammonia in the exhaust gas, the ammonia decomposition catalyst being disposed downstream of the first denitration catalyst in an exhaust gas flow, and a second denitration catalyst for reducing the nitrogen oxide in the exhaust gas, the second denitration catalyst being disposed downstream of the ammonia decomposition catalyst in the exhaust gas flow, wherein
a length of the first denitration catalyst in a direction of the exhaust gas flow is not less than three times a length of each ammonia decomposition catalyst.

An exhaust gas treatment method according to at least one embodiment of the present invention is an exhaust gas treatment method for treating exhaust gas generated by combusting fuel, the exhaust gas treatment method including:
a step of treating the exhaust gas using an exhaust gas treatment device, the exhaust gas treatment device comprising:

a first denitration catalyst for reducing a nitrogen oxide in the exhaust gas; and
at least one catalyst unit each including an ammonia decomposition catalyst for decomposing ammonia in the exhaust gas, the ammonia decomposition catalyst being disposed downstream of the first denitration catalyst in an exhaust gas flow, and a second denitration catalyst for reducing the nitrogen oxide in the exhaust gas, the second denitration catalyst being disposed downstream of the ammonia decomposition catalyst in the exhaust gas flow, wherein
in the step of treating, the exhaust gas is treated so that a ratio ($C_{NH3\_FSCR}/C_{N2O\_SYS}$) of an ammonia concentration ($C_{NH3\_FSCR}$) at an outlet of the first denitration catalyst to a dinitrogen monoxide concentration ($C_{N2O\_SYS}$) at an outlet of the at least one catalyst unit is not less than 10.0.

Advantageous Effects

According to at least one embodiment of the present invention, provided is an exhaust gas treatment device and an exhaust gas treatment method capable of reducing nitrogen oxides and ammonia in exhaust gas, while effectively suppressing an amount of dinitrogen monoxides to be produced.

BRIEF DESCRIPTION OF DRAWINGS

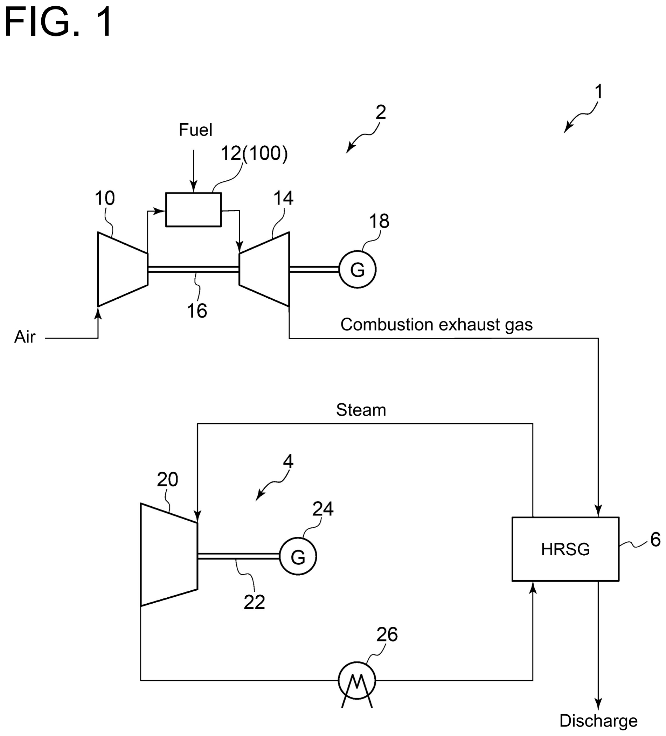

FIG. 1 is a schematic diagram of an example of a combustion facility to which an exhaust gas treatment device according to some embodiments is applied.

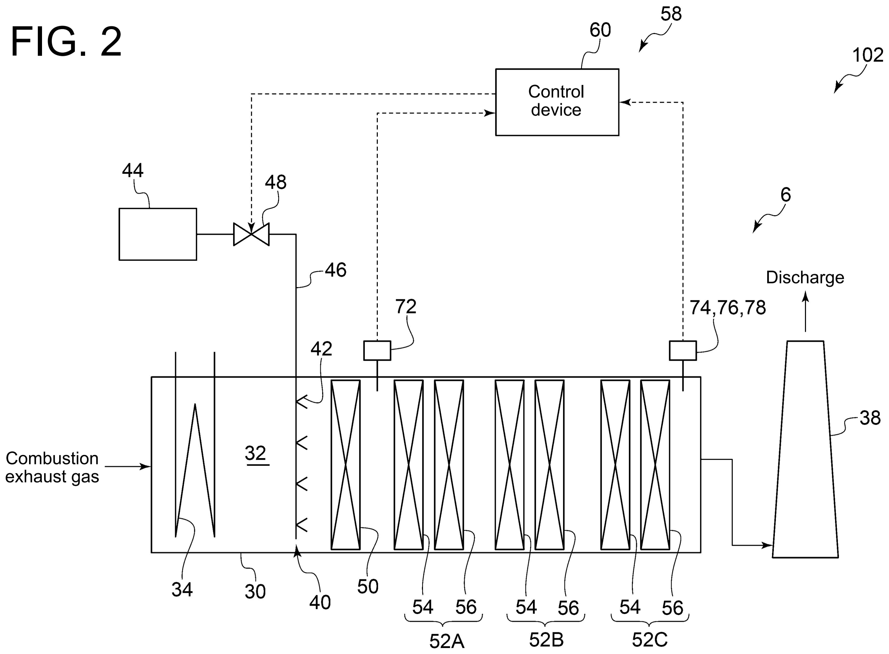

FIG. 2 is a schematic diagram of an exhaust gas treatment device according to one embodiment.

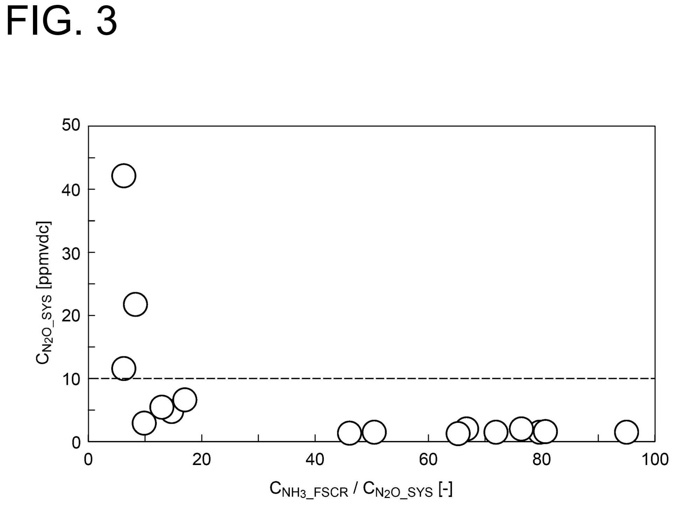

FIG. 3 is a graph illustrating a relationship between a dinitrogen monoxide concentration at an outlet of the exhaust gas treatment device and a ratio of the ammonia concentration at the outlet of a first denitration catalyst to the dinitrogen monoxide concentration at the outlet of the exhaust gas treatment device when combustion exhaust gas is treated by the exhaust gas treatment device according to one embodiment.

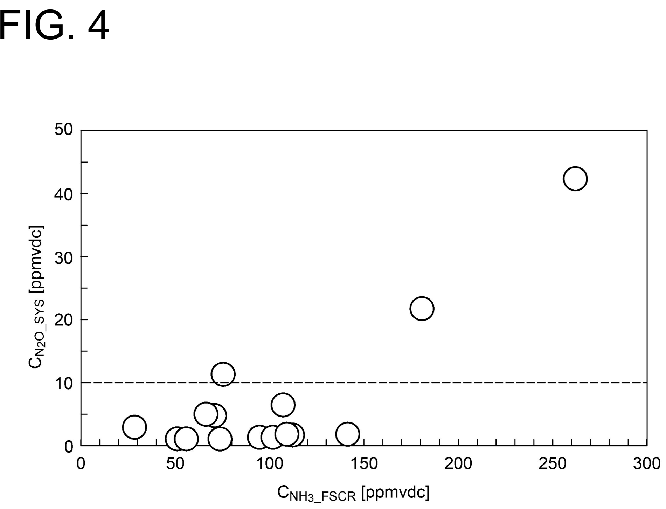

FIG. 4 is a graph illustrating a relationship between the dinitrogen monoxide concentration at the outlet of the exhaust gas treatment device and the ammonia concentration at the outlet of the first denitration catalyst when the combustion exhaust gas is treated by the exhaust gas treatment device according to one embodiment.

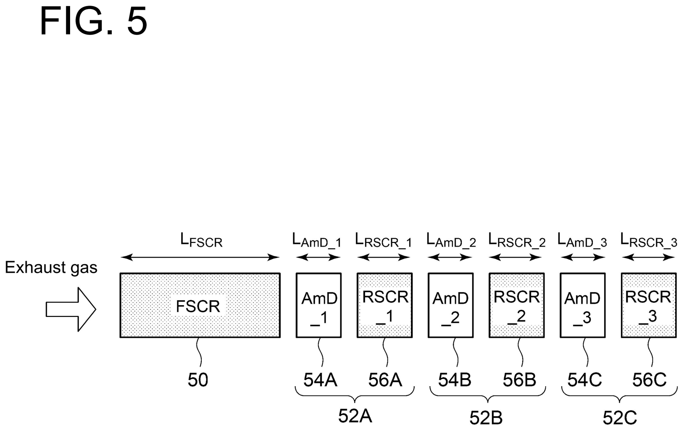

FIG. 5 is a schematic diagram illustrating an arrangement of catalysts included in the exhaust gas treatment device illustrated in FIG. 2.

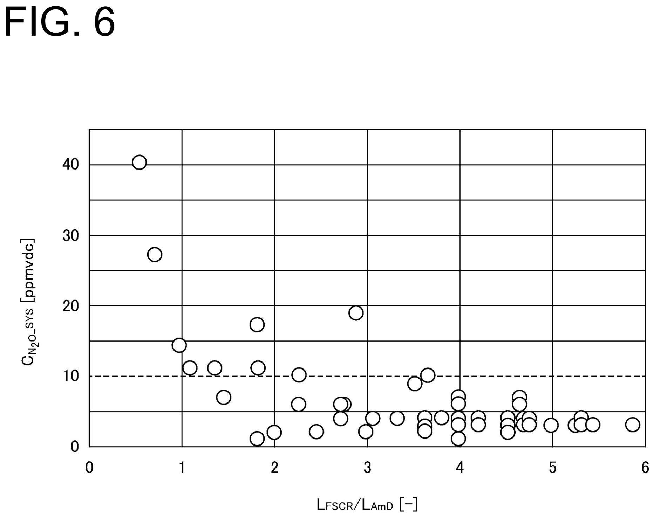

FIG. 6 is a graph illustrating a relationship between the dinitrogen monoxide concentration at the outlet of the exhaust gas treatment device and a ratio of a length of the first denitration catalyst and a length of the ammonia decomposition catalyst when the combustion exhaust gas is treated by the exhaust gas treatment device according to one embodiment.

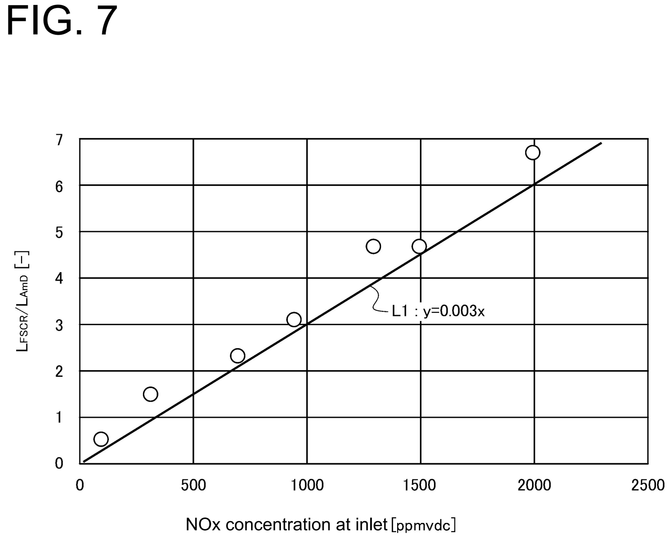

FIG. 7 is an example of a graph illustrating a relationship between the nitrogen oxide concentration (horizontal axis) in the exhaust gas introduced into the exhaust gas treatment device according to one embodiment and the ratio ($L_{FSCR}/L_{AmD}$) (vertical axis) of the length of the first denitration catalyst and the length of the ammonia decomposition catalyst.

DETAILED DESCRIPTION

Some embodiments of the present invention will now be described with reference to the accompanying drawings. It is intended, however, that unless particularly specified, dimensions, materials, shapes, relative positions and the like of components described in the embodiments or illustrated in the drawings shall be interpreted as illustrative only and not limitative of the scope of the present invention.

(Configuration of Combustion Facility)

FIG. 1 is a schematic diagram of an example of a combustion facility to which an exhaust gas treatment device according to some embodiments is applied. FIG. 2 is a schematic diagram of an exhaust gas treatment device according to one embodiment. In some embodiments, a combustion facility 1 includes a combustion device 100 (refer to FIG. 1) configured to combust fuel and an exhaust gas treatment device 102 (refer to FIG. 2) configured to treat combustion exhaust gas from the combustion device 100.

The combustion facility 1 illustrated in FIG. 1 is a Gas Turbine Combined Cycle (GTCC) power generation facility including a gas turbine facility 2 including a combustor 12 as an above-described combustion device 100, a steam turbine facility 4, and a Heat Recovery Steam Generator (HRSG) 6.

The gas turbine facility 2 includes a compressor 10, the above-described combustor 12, and a turbine 14. The compressor 10 is configured to compress air to produce compressed air. The combustor 12 is configured to generate combustion gas by a combusting reaction between compressed air from the compressor 10 and fuel. The turbine 14 is configured to be rotationally driven by the combustion gas from the combustor 12. A generator 18 is connected to the turbine 14 via a rotary shaft 16, and the generator 18 is driven by rotational energy of the turbine 14 to produce electricity. The combustion gas having completed its role in the turbine 14 is exhausted from the turbine 14 as combustion exhaust gas. The fuel supplied to the combustor 12 (combustion device 100) may include a carbon-containing fuel such as natural gas or coal gasification gas and/or a nitrogen-containing fuel such as ammonia.

The heat recovery steam generator 6 is configured to produce steam by means of heat of the combustion exhaust gas from the gas turbine facility 2. As illustrated in FIG. 2, the heat recovery steam generator 6 includes a duct 30 into which the combustion exhaust gas from the gas turbine facility 2 is introduced, and a heat transfer tube 34 provided in a flow path 32 of the combustion exhaust gas defined by the duct 30. Condensate from a condenser 26 in the steam turbine facility 4 is introduced into the heat transfer tube 34, and steam is produced in the heat transfer tube 34 by heat exchange between the combustion exhaust gas flowing through the duct 30 and the condensate. Exhaust gas having passed through the duct 30 in the heat recovery steam generator 6 is exhausted from a stack 38.

The steam turbine facility 4 includes a turbine 20 configured to be driven by the steam from the heat recovery steam generator 6. The generator 24 is connected to the turbine 20 via a rotary shaft 22, and a generator 24 is driven by rotational energy of the turbine 20 to produce electricity. The steam having completed its role in the turbine 20 is guided to the condenser 26 and is condensed into condensate by the condenser 26 to be supplied to the heat recovery steam generator 6.

(Configuration of Exhaust Gas Treatment Device)

As illustrated in FIG. 2, the exhaust gas treatment device 102 includes a first denitration catalyst 50 and at least one catalyst unit 52 (catalyst units 52A to 52C in FIG. 2) disposed downstream of the first denitration catalyst 50 in the exhaust gas flow. The at least one catalyst unit 52 each includes an ammonia decomposition catalyst 54 and a second denitration catalyst 56 disposed downstream of the ammonia decomposition catalyst 54 in the exhaust gas flow. Moreover, the exhaust gas treatment device 102 illustrated in FIG. 2 includes a reducing agent supply unit 40.

The reducing agent supply unit 40 is configured to supply a reducing agent for reducing nitrogen oxides (NOx; NO, $NO_2$, or the like) contained in the combustion exhaust gas from the combustion device 100 to the combustion exhaust gas flowing through the flow path 32. By supplying the reducing agent to the combustion exhaust gas containing nitrogen oxides, the nitrogen oxides contained in the combustion exhaust gas can be reduced, and thereby the amount of nitrogen oxide contained in the combustion exhaust gas can be reduced. By reaction between the nitrogen oxides and the reducing agent, the nitrogen oxides contained in the combustion exhaust gas can be decomposed into nitrogen and water, and thereby the amount of the nitrogen oxides contained in the combustion exhaust gas can be reduced.

The reducing agent supply unit 40 may be disposed upstream of the first denitration catalyst 50 in the flow path 32 of the combustion exhaust gas of the fuel. As illustrated in FIG. 2, the reducing agent supply unit 40 may include a nozzle 42 configured to spray a liquid or gas containing the reducing agent into the flow path 32. The liquid or gas containing the reducing agent stored in the reducing agent storage unit 44 may be supplied to the nozzle 42 through a supply line 46. The supply line 46 may be provided with a valve 48 for adjusting a supply amount of the reducing agent from the reducing agent supply unit 40.

The reducing agent supplied from the reducing agent supply unit 40 is a substance having an action of reducing nitrogen oxides and may include, for example, ammonia or urea. The reducing agent may be supplied to the combustion exhaust gas in the form of an aqueous solution (e.g., ammonia water or urea water).

The first denitration catalyst 50 may be disposed downstream of the reducing agent supply unit 40 in the flow path 32. The first denitration catalyst 50 is configured to promote a reduction reaction between the nitrogen oxides in the combustion exhaust gas and the reducing agent containing ammonia (including ammonia originally contained in the fuel and/or the reducing agent supplied from the reducing agent supply unit 40). The first denitration catalyst 50 may include, for example, a metal or metallic compound including titanium, vanadium, tungsten, or molybdenum.

The ammonia decomposition catalyst 54 has a function of promoting a decomposition reaction of ammonia in the combustion exhaust gas. The exhaust gas flowing through the flow path 32 comes into contact with the ammonia decomposition catalyst 54, thereby decomposing the ammonia contained in the exhaust gas (i.e., unreacted ammonia having not been consumed by the first denitration catalyst 50). The ammonia decomposition catalyst 54 may include a metal or metallic compound, including platinum, copper, iron, cobalt, palladium, iridium, nickel, or ruthenium.

The second denitration catalyst 56 constituting the catalyst unit 52 together with the ammonia decomposition catalyst 54 is disposed downstream of the corresponding ammonia decomposition catalyst 54 in the flow path 32. The second denitration catalyst 56 is configured to promote a reduction reaction between the nitrogen oxides in the combustion exhaust gas and the reducing agent containing ammonia (including ammonia originally contained in the fuel and/or the reducing agent supplied from the reducing agent supply unit 40). The second denitration catalyst 56 may include, for example, a metal or metallic compound including titanium, vanadium, tungsten, or molybdenum.

The number of catalyst units 52 constituting the exhaust gas treatment device 102 is not particularly limited as long as it is not less than one.

In some embodiments, the exhaust gas treatment device 102 may include a plurality of (i.e., not less than two) catalyst units 52. In the exemplary embodiment illustrated in FIG. 2, the exhaust gas treatment device 102 includes three sets of catalyst units 52.

As illustrated in FIG. 2, the exhaust gas treatment device 102 may include a first ammonia concentration measurement unit 72 for measuring the ammonia concentration at an outlet of the first denitration catalyst 50 in the flow path 32 of the combustion exhaust gas. Moreover, the exhaust gas treatment device 102 may include a second ammonia concentration measurement unit 74, an NOx concentration measurement unit 76, and/or an $N_2O$ concentration measurement unit 78 respectively for measuring the ammonia concentration, the nitrogen oxide (NOx) concentration, and/or the dinitrogen monoxide ($N_2O$) concentration, at an outlet of the at least one catalyst unit 52 in the flow path 32 of the combustion exhaust gas (i.e., an outlet of the exhaust gas treatment device 102). It is noted that the outlet of the at least one catalyst unit 52 is positioned downstream of the catalyst unit 52 (the catalyst unit 52C in FIG. 2) positioned most downstream among the at least one catalyst unit 52.

The nitrogen oxide concentration in the combustion exhaust gas can be measured, for example, using a chemiluminescent NOx meter (JIS B7982), or non-dispersive infrared analyzer (NDIR) method, or by zinc-reduced naphthylethylenediamine absorptiometry (Zn-NEDA) method, in accordance with JIS K 0104. The NOx concentration measurement unit 76 may be configured to measure the NOx concentration using any of these methods.

Described here are the reaction occurring in the first denitration catalyst 50 and the at least one catalyst unit 52 (the ammonia decomposition catalyst 54 and the second denitration catalyst 56), and changes in the concentrations of the nitrogen oxide (NOx), the ammonia ($NH_3$) and the dinitrogen monoxide ($N_2O$). In the following description, FSCR refers to the first denitration catalyst 50, and AmD_i and RSCR_i respectively refer to the ammonia decomposition catalyst 54 and the second denitration catalyst 56 constituting the i-th catalyst unit 52 from the upstream side.

In the first denitration catalyst 50 and the second denitration catalyst 56 of the catalyst unit 52, the nitrogen oxides are reduced by ammonia to produce nitrogen and water mainly through the reaction of following chemical formula (A).

$$4NO+4NH_3+O_2 \rightarrow 4N_2+6H_2O \qquad (A)$$

Therefore, in the first denitration catalyst 50 (FSCR) and the second denitration catalyst 56 (RSCR_i), NOx and $NH_3$ in the exhaust gas are consumed and the concentrations thereof are reduced.

In the ammonia decomposition catalyst 54, the ammonia is oxidatively decomposed to produce nitrogen and water mainly through the reaction of the following chemical formula (B).

$$4NH_3+3O_2 \rightarrow 2N_2+6H_2O \qquad (B)$$

Moreover, in the ammonia decomposition catalyst 54, the ammonia is oxidatively decomposed to produce nitrogen monoxide (NO) and dinitrogen monoxide ($N_2O$) as by-products through the side reaction of the following chemical formulas (C) and (D).

$$4NH_3+5O_2 \rightarrow 4NO+6H_2O \qquad (C)$$

$$2NH_3+2O_2 \rightarrow N_2O+3H_2O \qquad (D)$$

Accordingly, in the ammonia decomposition catalyst 54 (AmD_i), $NH_3$ in the exhaust gas is consumed, thereby reducing the $NH_3$ concentration, while the concentrations of NOx and $N_2O$ are increased.

Although limit values, such as a management value and a restriction value, may be set for the concentrations of NOx, $NH_3$, and $N_2O$ in the exhaust gas exhausted from the exhaust gas treatment device 102, final concentrations of NOx, $NH_3$, and $N_2O$ in the exhaust gas exhausted from the exhaust gas treatment device 102 are variously changed in accordance with the composition of the exhaust gas introduced into the exhaust gas treatment device 102 or the combination of the catalyst in the exhaust gas treatment device 102, and in some cases, an amount of $N_2O$ etc. produced in the catalyst may be increased. Accordingly, it is necessary to devise a method of reducing the exhaust amount (concentrations) of NOx and $NH_3$ while suppressing the by-production and increase in concentration of $N_2O$.

In this regard, the exhaust gas treatment device 102 according to some embodiments, a ratio ($C_{NH3\_FSCR}/C_{N2O\_SYS}$) of the ammonia concentration ($C_{NH3\_FSCR}$) (i.e., $NH_3$ concentration at a measuring position of the first ammonia concentration measurement unit 72) at the outlet of the first denitration catalyst 50 to the dinitrogen monoxide concentration ($C_{N2O\_SYS}$) (i.e., $N_2O$ concentration at a measuring position of the $N_2O$ concentration measurement unit 78) at the outlet of the at least one catalyst unit 52 is not less than 10.0.

Here, FIG. 3 is a graph illustrating a relationship (test results) between the dinitrogen monoxide concentration ($C_{N2O\_SYS}$) at the outlet of the at least one catalyst unit 52 (outlet of the exhaust gas treatment device 102) and the above-described ratio ($C_{NH3\_FSCR}/C_{N2O\_SYS}$), when the combustion exhaust gas is treated by the exhaust gas treatment device 102 (including three catalyst units 52) according to one embodiment. It is noted that the plots in the graph of FIG. 3 include those under different test conditions, such as the type or length of the catalyst, or the reaction temperature in the catalyst and the contact time between the exhaust gas and the catalyst.

As a result of intensive study by the present inventors, it has been found that when the exhaust gas treatment device 102 including the first denitration catalyst 50 and the at least one catalyst unit 52 (a combination of the ammonia decomposition catalyst 54 and the second denitration catalyst 56) is used, as illustrated in the graph of FIG. 3, the above-described ratio ($C_{NH3\_FSCR}/C_{N2O\_SYS}$) is set to not less than 10.0, and thereby the nitrogen oxide (NOx) concentration and the ammonia concentration at the outlet of the exhaust gas treatment device 102 can respectively be reduced to not more than predetermined limit values (e.g., respectively 10 [ppmvdc] and 5 [ppmvdc]). Moreover, the dinitrogen monoxide ($N_2O$) concentration at the outlet of the exhaust gas treatment device 102 can be suppressed to a low value (e.g., not more than 10 [ppmvdc]). Therefore, according to the above-described embodiments, the nitrogen oxide (NOx) and the ammonia ($NH_3$) in the exhaust gas can be reduced while effectively suppressing the amount of the dinitrogen monoxide ($N_2O$) to be produced.

In addition, according to the exhaust gas treatment device 102 according to the above-described embodiments, even when the nitrogen oxide concentration in the exhaust gas introduced into the exhaust gas treatment device 102 is relatively high (e.g., not less than 500 ppm), the nitrogen oxide (NOx) concentration and the ammonia concentration at the outlet of the exhaust gas treatment device 102 can respectively be reduced to not more than predetermined limit values (e.g., respectively 10 [ppmvdc] and 5 [ppmvdc]). Moreover, the dinitrogen monoxide ($N_2O$) concentration at the outlet of the exhaust gas treatment device 102 can be suppressed to a low value (e.g., not more than 10 [ppmvdc]). An example of exhaust gas having a relatively high concentration of nitrogen oxides is combustion exhaust gas from a fuel containing ammonia.

In some embodiments, the above-described ratio ($C_{NH3\_FSCR}/C_{N2O\_SYS}$) is not more than 100.0.

According to the above-described embodiments, since the above-described ratio ($C_{NH3\_FSCR}/C_{N2O\_SYS}$) is set to not more than 100.0, the ammonia concentration in the exhaust gas is relatively low before being introduced into the at least one catalyst unit 52 including the ammonia decomposition catalyst 54. Therefore, it becomes easy to reduce the dinitrogen monoxide ($N_2O$) concentration at the outlet of the exhaust gas treatment device 102.

In some embodiments, the ammonia concentration ($C_{NH3\_FSCR}$) at the outlet of the first denitration catalyst 50 is not more than 150 ppmvdc.

Here, FIG. 4 is a graph illustrating a relationship between the dinitrogen monoxide concentration ($C_{N2O\_SYS}$) at the outlet of the at least one catalyst unit 52 (outlet of the exhaust gas treatment device 102) and the ammonia concentration ($C_{NH3\_FSCR}$) at the outlet of the first denitration catalyst 50, when the combustion exhaust gas is treated by the exhaust gas treatment device 102 (including three catalyst units 52) according to one embodiment. It is noted that the plots in the graph of FIG. 4 include those under different test conditions, such as the type or length of the catalyst, or the reaction temperature in the catalyst and the contact time between the exhaust gas and the catalyst.

The graph in FIG. 4 shows that when the combustion exhaust gas is treated with the exhaust gas treatment device 102 according to one embodiment, the dinitrogen monoxide ($N_2O$) concentration at the outlet of the exhaust gas treatment device 102 can be particularly reduced when the ammonia concentration ($C_{NH3\_FSCR}$) at the outlet of the first denitration catalyst 50 is not more than 150 ppmvdc. According to the above-described embodiments, the ammonia concentration ($C_{NH3\_FSCR}$) at the outlet of the first denitration catalyst 50 is set to not more than 150 ppmvdc, the dinitrogen monoxide ($N_2O$) concentration at the outlet of the exhaust gas treatment device 102 can be effectively reduced.

In some embodiments, as illustrated, for example, in FIG. 2, the exhaust gas treatment device 102 includes the above-described reducing agent supply unit 40, and a reducing agent supply amount adjusting unit 58 configured to adjust a supply amount of the reducing agent from the reducing agent supply unit 40, on the basis of the nitrogen oxide concentration or the ammonia concentration at the outlet of the first denitration catalyst 50 and the dinitrogen monoxide concentration at the outlet of the at least one catalyst unit 52.

The reducing agent supply amount adjusting unit 58 may include a control device 60 configured to adjust the supply amount of the reducing agent (ammonia etc.) from the reducing agent supply unit 40 on the basis of measurement results of the nitrogen oxide concentration or the ammonia ($NH_3$) concentration and the dinitrogen monoxide ($N_2O$) concentration measured by the NOx concentration measurement unit 76 or the second ammonia concentration measurement unit 74 and the $N_2O$ concentration measurement unit 78. It may be configured to send a signal indicating the measurement results by the NOx concentration measurement unit 76 or the second ammonia concentration measurement unit 74 and the $N_2O$ concentration measurement unit 78 to the control device 60.

The control device 60 includes a computer provided with a processor (CPU, GPU, or the like), a storage device (memory device; RAM etc.), an auxiliary memory unit, an interface, and the like. The processor is configured to process signals received from the NOx concentration measurement unit 76 or the second ammonia concentration measurement unit 74 and the $N_2O$ concentration measurement unit 78 via the interface. The processor may be configured to calculate an opening command value issued to the valve 48 on the basis of the concentration measurement values obtained by the NOx concentration measurement unit 76 or the second ammonia concentration measurement unit 74 and the $N_2O$ concentration measurement unit 78. The control device 60 may be configured to issue the calculated opening command value to an actuator for changing the opening of the valve 48. In this manner, the supply amount of the reducing agent from the reducing agent supply unit 40 may be adjusted by the control device 60.

According to the above-described embodiments, since the supply amount of the reducing agent (e.g., ammonia) is adjusted on the basis of the nitrogen oxide concentration or the ammonia concentration ($C_{NH3\_FSCR}$) at the outlet of the first denitration catalyst 50, and the dinitrogen monoxide concentration ($C_{N2O\_SYS}$) at the outlet of the at least one catalyst unit 52 (i.e., the outlet of the exhaust gas treatment device 102), it is possible to easily adjust the ratio ($C_{NH3\_FSCR}/C_{N2O\_SYS}$) between the above-described concentrations. Therefore, according to the above-described embodiments, the nitrogen oxide and the ammonia in the exhaust gas can be easily reduced while effectively suppressing the amount of the dinitrogen monoxide ($N_2O$) to be produced.

FIG. 5 is a schematic diagram illustrating an arrangement of catalysts (the first denitration catalyst 50 and the at least one catalyst unit 52 (the ammonia decomposition catalyst 54 and the second denitration catalyst 56)) included the exhaust gas treatment device 102 illustrated in FIG. 2. In the figure, $L_{FSCR}$ indicates a length of the first denitration catalyst 50 in a flow direction of the exhaust gas in the exhaust gas treatment device 102, and $L_{AmD\_i}$ and $L_{RSCR\_i}$ indicate respectively lengths of the ammonia decomposition catalyst 54 and the second denitration catalyst 56 of the i-th catalyst unit 52 from the upstream side.

In some embodiments, in the exhaust gas treatment device 102, the length of the first denitration catalyst 50 in the direction of the exhaust gas flow is configured to satisfy a relational expression expressed as

$$y \geq 0.003x,$$

where x [ppmvdc] is the nitrogen oxide (NOx) concentration in the exhaust gas introduced into the exhaust gas treatment device 102, and y [-] is the ratio ($L_{FSCR}/L_{AmD}$) of the length $L_{FSCR}$ of the first denitration catalyst in the direction of the exhaust gas flow and the length $L_{AmD}$ of each ammonia decomposition catalyst.

The nitrogen oxide concentration in the exhaust gas introduced into the exhaust gas treatment device 102 is the nitrogen oxide concentration in the exhaust gas exhausted from the combustion device 100. The nitrogen oxide concentration can be measured in the exhaust gas path between the combustion device 100 and the exhaust gas treatment device 102 and, for example, can be measured at the outlet of the combustion device 100 or the inlet of the exhaust gas treatment device 102 (e.g., the inlet of the duct 30 illustrated in FIG. 2).

FIG. 6 is a graph illustrating a relationship (calculated value) between the dinitrogen monoxide concentration ($C_{N2O\_SYS}$) at the outlet of the at least one catalyst unit 52 (outlet of the exhaust gas treatment device 102) and the ratio ($L_{FSCR}/L_{AmD}$) of the length ($L_{FSCR}$) of the first denitration catalyst 50 to the length ($L_{AmD}$) of the ammonia decomposition catalyst 54, when the combustion exhaust gas is treated with the exhaust gas treatment device 102 (including three catalyst units 52) according to one embodiment. The lengths of the three ammonia decomposition catalysts 54 included in the three catalyst units 52 in this exhaust gas treatment device 102 are all $L_{AmD}$. It is noted that the plots in the graph of FIG.

6 include those under different calculation conditions, such as the nitrogen oxide concentration in the exhaust gas introduced into the exhaust gas treatment device 102.

FIG. 7 is an example of a graph illustrating a relationship between the nitrogen oxide concentration in the exhaust gas introduced into the exhaust gas treatment device 102 (hereinafter, the NOx concentration at the inlet of the exhaust gas treatment device 102; horizontal axis) and the ratio ($L_{FSCR}/L_{AmD}$) (vertical axis) of the length $L_{FSCR}$ of the first denitration catalyst and the length $L_{AmD}$ of each ammonia decomposition catalyst in the direction of the exhaust gas flow. Each plot in the graph of FIG. 7 is the plot in the graph of FIG. 6 having the smallest catalyst length ratio in which the dinitrogen monoxide concentration ($C_{N2O\_SYS}$) at the outlet of the exhaust gas treatment device 102 is not more than a specified value (10 ppm) regarding each inlet NOx concentration. Moreover, the straight line L1 in the graph of FIG. 7 is an approximation straight line of these plots, which is expressed by the relational expression y=0.003x, where the inlet NOx concentration is x [ppmvdc] and the above-mentioned catalyst length ratio ($L_{FSCR}/L_{AmD}$) is y [-].

That is, the graphs in FIGs. 6 and 7 show that when the relationship y≥0.003x is satisfied, the dinitrogen monoxide concentration ($C_{N2O\_SYS}$) at the outlet of the exhaust gas treatment device 102 is not more than the specified value (10 ppm), and the dinitrogen monoxide ($N_2O$) concentration at the outlet of the exhaust gas treatment device 102 can be easily reduced. This indicates that the ratio ($L_{FSCR}/L_{AmD}$) of the length $L_{FSCR}$ of the first denitration catalyst 50 to the length $L_{AmD}$ of each ammonia decomposition catalyst 54 is close to 1 when the inlet NOx concentration is low (e.g., 100 ppmvdc), but the ratio ($L_{FSCR}/L_{AmD}$) of the length $L_{FSCR}$ of the first denitration catalyst 50 to the length $L_{AmD}$ of each ammonia decomposition catalyst 54 is large when the inlet NOx concentration is high (e.g., 2000 ppmvdc). Accordingly, it is conceivable that this is because when the relationship y≥0.003x is satisfied, the ratio of the ammonia concentration and the nitrogen oxide concentration at the outlet of the ammonia decomposition catalyst 54 (AmD_1) at the first stage (i.e., the inlet of the second denitration catalyst 56 (RSCR_1) at the first stage) easily falls within an appropriate range (e.g., not less than 0.6 and not more than 2.0).

According to the above-described embodiments, in the exhaust gas treatment device 102 including the first denitration catalyst 50 and the at least one catalyst unit 52 (the combination of the ammonia decomposition catalyst 54 and the second denitration catalyst 56), since the length of the first denitration catalyst 50 in the direction of the exhaust gas flow is configured so that the relationship between the nitrogen oxide concentration x [ppmvdc] in the exhaust gas introduced into the exhaust gas treatment device 102 and the ratio y [-] of the length $L_{FSCR}$ of the first denitration catalyst 50 and the length $L_{AmD}$ of each ammonia decomposition catalyst 54 in the direction of the exhaust gas flow satisfies the relational expression expressed by y≥0.003x, the ratio of the ammonia concentration and the nitrogen oxide concentration at the outlet of the ammonia decomposition catalyst 54 (AmD_1) at the first stage (i.e., the inlet of the second denitration catalyst 56 (RSCR_1) at the first stage) easily falls within an appropriate range (e.g., not less than 0.6 and not more than 2.0). Therefore, according to the above-described embodiments, the nitrogen oxide and the ammonia in the exhaust gas can be reduced while effectively suppressing the amount of the dinitrogen monoxide ($N_2O$) to be produced.

The contents described in each of the above-described embodiments can be understood, for example, as follows.

[1] An exhaust gas treatment device (102) according to at least one embodiment of the present invention is an exhaust gas treatment device for treating exhaust gas generated by combusting fuel, the exhaust gas treatment device including:

a first denitration catalyst (50) for reducing a nitrogen oxide in the exhaust gas; and
at least one catalyst unit (52) each including an ammonia decomposition catalyst (54) for decomposing ammonia in the exhaust gas, the ammonia decomposition catalyst being disposed downstream of the first denitration catalyst in an exhaust gas flow, and a second denitration catalyst (56) for reducing the nitrogen oxide in the exhaust gas, the second denitration catalyst being disposed downstream of the ammonia decomposition catalyst in the exhaust gas flow, wherein
a ratio ($C_{NH3\_FSCR}/C_{N2O\_SYS}$) of an ammonia concentration ($C_{NH3\_FSCR}$) at an outlet of the first denitration catalyst to a dinitrogen monoxide concentration ($C_{N2O\_SYS}$) at an outlet of the at least one catalyst unit is not less than 10.0.

As a result of intensive study of the present inventors, it has been found that when using the exhaust gas treatment device including the first denitration catalyst and the at least one catalyst unit (the combination of the ammonia decomposition catalyst and the second denitration catalyst), the ratio ($C_{NH3\_FSCR}/C_{N2O\_SYS}$) of the ammonia concentration ($C_{NH3\_FSCR}$) at the outlet of the first denitration catalyst to the dinitrogen monoxide concentration ($C_{N2O\_SYS}$) at the outlet of the at least one catalyst unit (the outlet of the exhaust gas treatment device) is set to be not less than 10.0, and thereby the nitrogen oxide (NOx) concentration and the ammonia concentration in an outlet of the exhaust gas treatment device can be respectively reduced to not more than the predetermined limit values, and the dinitrogen monoxide ($N_2O$) concentration at the outlet of the exhaust gas treatment device can be reduced to a low value. Therefore, according to the above-described configuration [1], the nitrogen oxide and the ammonia in the exhaust gas can be reduced while effectively suppressing the amount of the dinitrogen monoxide to be produced.

[2] In some embodiments, in the above-described configuration [1],
the ratio ($C_{NH3\_FSCR}/C_{N2O\_SYS}$) is not more than 100.0.

According to the above-described configuration [2], since the above-described ratio ($C_{NH3\_FSCR}/C_{N2O\_SYS}$) is set to not more than 100.0, the ammonia concentration in the exhaust gas is relatively low before being introduced into the at least one catalyst unit including the ammonia decomposition catalyst. Therefore, it becomes easy to reduce the dinitrogen monoxide concentration at the outlet of the exhaust gas treatment device.

[3] In some embodiments, in the above-described configuration [1] or [2],
the ammonia concentration ($C_{NH3\_FSCR}$) at the outlet of the first denitration catalyst is not more than 150 ppmvdc.

According to the above-described configuration [3], the ammonia concentration ($C_{NH3\_FSCR}$) at the outlet of the first denitration catalyst is set to not more than 150 ppmvdc, thereby effectively reducing the dinitrogen monoxide ($N_2O$) concentration at the outlet of the exhaust gas treatment device.

[4] In some embodiments, in any one of the above-described configurations [1] to [3], the exhaust gas treatment device includes

> a reducing agent supply unit (40) configured for supplying a reducing agent capable of reducing the nitrogen oxide to the exhaust gas; and
> a reducing agent supply amount adjusting unit (58) configured to adjust a supply amount of the reducing agent from the reducing agent supply unit, on the basis of the ammonia concentration at the outlet of the first denitration catalyst and the dinitrogen monoxide concentration at the outlet of the at least one catalyst unit.

According to the above-described configuration [4], since the supply amount of the reducing agent (e.g., ammonia) is adjusted on the basis of the ammonia concentration ($C_{NH3\_FSCR}$) at the outlet of the first denitration catalyst and the dinitrogen monoxide concentration ($C_{N2O\_SYS}$) at the outlet of the at least one catalyst unit (i.e., outlet of the exhaust gas treatment device), it is possible to easily adjust the ratio ($C_{NH3\_FSCR}/C_{N2O\_SYS}$) between the above-described concentrations. Therefore, according to the above-described configuration [4], the nitrogen oxide and the ammonia in the exhaust gas are easily reduced while effectively suppressing the amount of the dinitrogen monoxide to be produced.

[5] An exhaust gas treatment device (102) according to at least one embodiment of the present invention is an exhaust gas treatment device for treating exhaust gas generated by combusting fuel, the exhaust gas treatment device including:

> a first denitration catalyst (50) for reducing a nitrogen oxide in the exhaust gas; and
> at least one catalyst unit (52) each including an ammonia decomposition catalyst (54) for decomposing ammonia in the exhaust gas, the ammonia decomposition catalyst being disposed downstream of the first denitration catalyst in an exhaust gas flow, and a second denitration catalyst (56) for reducing the nitrogen oxide in the exhaust gas, the second denitration catalyst being disposed downstream of the ammonia decomposition catalyst in the exhaust gas flow, wherein
> a length of the first denitration catalyst in a direction of the exhaust gas flow is configured to satisfy a relational expression expressed as

$$y \geq 0.003x,$$

> where x [ppmvdc] is a nitrogen oxide concentration in the exhaust gas introduced into the exhaust gas treatment device, and y [-] is a ratio ($L_{FSCR}/L_{AmD}$) of the length $L_{FSCR}$ of the first denitration catalyst in the direction of the exhaust gas flow and a length $L_{AmD}$ of each ammonia decomposition catalyst.

According to the above-described configuration [5], in the exhaust gas treatment device including the first denitration catalyst and the at least one catalyst unit (the combination of the ammonia decomposition catalyst and the second denitration catalyst), since the length of the first denitration catalyst in the direction of the exhaust gas flow is configured so that the relationship between the nitrogen oxide concentration x [ppmvdc] in the exhaust gas introduced into the exhaust gas treatment device and the ratio y [-] of the length $L_{FSCR}$ of the first denitration catalyst and the length $L_{AmD}$ of each ammonia decomposition catalyst in the direction of the exhaust gas flow satisfies the relational expression expressed by $y \geq 0.003x$, the ratio of the ammonia concentration and the nitrogen oxide concentration at the outlet of the ammonia decomposition catalyst at the first stage (i.e., the inlet of the second denitration catalyst at the first stage) easily falls within an appropriate range. Therefore, according to the above-described configuration [5], the nitrogen oxide and the ammonia in the exhaust gas can be reduced while effectively suppressing the amount of the dinitrogen monoxide to be produced.

[6] An exhaust gas treatment method according to at least one embodiment of the present invention is an exhaust gas treatment method for treating exhaust gas generated by combusting fuel, the exhaust gas treatment method including: a step of treating the exhaust gas using an exhaust gas treatment device, the exhaust gas treatment device comprising:

a first denitration catalyst (50) for reducing a nitrogen oxide in the exhaust gas; and
at least one catalyst unit (52) each including an ammonia decomposition catalyst (54) for decomposing ammonia in the exhaust gas, the ammonia decomposition catalyst being disposed downstream of the first denitration catalyst in an exhaust gas flow, and a second denitration catalyst (56) for reducing the nitrogen oxide in the exhaust gas, the second denitration catalyst being disposed downstream of the ammonia decomposition catalyst in the exhaust gas flow wherein
in the step of treating, the exhaust gas is treated so that a ratio ($C_{NH3\_FSCR}/C_{N2O\_SYS}$) of an ammonia concentration ($C_{NH3\_FSCR}$) at an outlet of the first denitration catalyst to a dinitrogen monoxide concentration ($C_{N2O\_SYS}$) at an outlet of the at least one catalyst unit is not less than 10.0.

As a result of intensive study of the present inventors, it has been found that when using the exhaust gas treatment device including the first denitration catalyst and the at least one catalyst unit (the combination of the ammonia decomposition catalyst and the second denitration catalyst), the ratio ($C_{NH3\_FSCR}/C_{N2O\_SYS}$) of the ammonia concentration ($C_{NH3\_FSCR}$) at the outlet of the first denitration catalyst to the dinitrogen monoxide concentration ($C_{N2O\_SYS}$) at the outlet of the at least one catalyst unit (the outlet of the exhaust gas treatment device) is set to be not less than 10.0, and thereby the nitrogen oxide (NOx) concentration and the ammonia concentration in an outlet of the exhaust gas treatment device can be respectively reduced to not more than the predetermined limit values, and the dinitrogen monoxide ($N_2O$) concentration at the outlet of the exhaust gas treatment device can be reduced to a low value. Therefore, according to the above-described method [6], the nitrogen oxide and the ammonia in the exhaust gas can be reduced while effectively suppressing the amount of the dinitrogen monoxide to be produced.

[7] An exhaust gas treatment method according to at least one embodiment of the present invention is an exhaust gas treatment method for treating exhaust gas generated by combusting fuel, the exhaust gas treatment method including:

a step of treating the exhaust gas using an exhaust gas treatment device, the exhaust gas treatment device comprising:
a first denitration catalyst (50) for reducing a nitrogen oxide in the exhaust gas; and
at least one catalyst unit (52) each including an ammonia decomposition catalyst (54) for decomposing ammonia in the exhaust gas, the ammonia decomposition catalyst being disposed downstream of the first denitration catalyst in an exhaust gas flow, and a second denitration catalyst (56) for reducing the nitrogen oxide in the exhaust gas, the second denitration catalyst being disposed downstream of the ammonia decomposition catalyst in the exhaust gas flow, wherein
in the step of treating, the exhaust gas is treated by means of at least the first denitration catalyst satisfying a relational expression expressed as

$$y \geq 0.003x,$$

where x [ppmvdc] is a nitrogen oxide concentration in the exhaust gas introduced into the exhaust gas treatment device, and y [-] is a ratio ($L_{FSCR}/L_{AmD}$) of the length $L_{FSCR}$ of the first denitration catalyst in the direction of the exhaust gas flow and a length $L_{AmD}$ of each ammonia decomposition catalyst.

According to the above-described method [7], in the exhaust gas treatment device including the first denitration catalyst and the at least one catalyst unit (the combination of the ammonia decomposition catalyst and the second denitration catalyst), since the first denitration catalyst is used so that the relationship between the nitrogen oxide concentration x [ppmvdc] in the exhaust gas introduced into the exhaust gas treatment device and the ratio y [-] of the length $L_{FSCR}$ of the first denitration catalyst and the length $L_{AmD}$ of each ammonia decomposition catalyst in the direction of the exhaust gas flow satisfies the relational expression expressed by $y \geq 0.003x$, the ratio of the ammonia concentration and the nitrogen oxide concentration at the outlet of the ammonia decomposition catalyst at the first stage (i.e., the inlet of the second denitration catalyst at the first stage) easily falls within an appropriate range. Therefore, according to the above-described configuration [5], the nitrogen oxide and the ammonia in the exhaust gas can be reduced while effectively suppressing the amount of the dinitrogen monoxide to be produced.

Embodiments of the present invention have been described in detail above, but the present invention is not limited to the embodiments described above and includes modifications of the embodiments described above and embodiments composed of combinations of those embodiments.

An expression used herein of a relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For example, an expression used herein of an equal state such as "same" "equal" and "uniform" shall not be construed as indicating only the state in which the feature is strictly equal, but also includes a state in which there is a tolerance or a difference that can still achieve the same function.

Moreover, an expression used herein of a shape such as a rectangular shape or a cylindrical shape shall not be construed as only the geometrically strict shape, but also includes a shape with unevenness or chamfered corners within the range in which the same effect can be achieved.

Furthermore, an expression used herein such as "comprise", "include", and "have" are not intended to be exclusive of other components.

Reference Signs List

| | |
|---|---|
| 1 | Combustion facility |
| 2 | Gas turbine facility |
| 4 | Steam turbine facility |
| 6 | Heat recovery steam generator |
| 10 | Compressor |
| 12 | Combustor |
| 14 | Turbine |
| 16 | Rotary shaft |
| 18 | Generator |
| 20 | Turbine |
| 22 | Rotary shaft |
| 24 | Generator |
| 26 | Condenser |
| 30 | Duct |
| 32 | Flow path |
| 34 | Heat transfer tube |
| 38 | Stack |
| 40 | Reducing agent supply unit |
| 42 | Nozzle |
| 44 | Reducing agent storage unit |
| 46 | Supply line |
| 48 | Valve |
| 50 | First denitration catalyst |
| 52 | Catalyst unit |
| 52A | Catalyst unit |
| 52B | Catalyst unit |
| 52C | Catalyst unit |
| 54 | Ammonia decomposition catalyst |
| 56 | Second denitration catalyst |
| 58 | Reducing agent supply amount adjusting unit |
| 60 | Control device |
| 72 | First ammonia concentration measurement unit |
| 74 | Second ammonia concentration measurement unit |
| 76 | NOx concentration measurement unit |
| 78 | $N_2O$ concentration measurement unit |
| 100 | Combustion device |
| 102 | Exhaust gas treatment device |

**Claims**

1. An exhaust gas treatment device for treating exhaust gas generated by combusting fuel, the exhaust gas treatment device comprising:

a first denitration catalyst for reducing a nitrogen oxide in the exhaust gas; and
at least one catalyst unit each including an ammonia decomposition catalyst for decomposing ammonia in the exhaust gas, the ammonia decomposition catalyst being disposed downstream of the first denitration catalyst in an exhaust gas flow, and a second denitration catalyst for reducing the nitrogen oxide in the exhaust gas, the second denitration catalyst being disposed downstream of the ammonia decomposition catalyst in the exhaust gas flow, wherein
a ratio ($C_{NH3\_FSCR}/C_{N2O\_SYS}$) of an ammonia concentration ($C_{NH3\_FSCR}$) at an outlet of the first denitration catalyst to a dinitrogen monoxide concentration ($C_{N2O\_SYS}$) at an outlet of the at least one catalyst unit is not less than 10.0.

2. The exhaust gas treatment device according to claim 1, wherein
the ratio ($C_{NH3\_FSCR}/C_{N2O\_SYS}$) is not more than 100.0.

3. The exhaust gas treatment device according to claim 1 or 2, wherein
the ammonia concentration ($C_{NH3\_FSCR}$) at the outlet of the first denitration catalyst is not more than 150 ppmvdc.

4. The exhaust gas treatment device according to claim 1 or 2, comprising:

a reducing agent supply unit for supplying a reducing agent capable of reducing the nitrogen oxide to the exhaust gas; and
a reducing agent supply amount adjusting unit configured to adjust a supply amount of the reducing agent from the reducing agent supply unit, on the basis of a nitrogen oxide concentration or the ammonia concentration at the outlet of the first denitration catalyst and the dinitrogen monoxide concentration at the outlet of the at least one catalyst unit.

5. An exhaust gas treatment device for treating exhaust gas generated by combusting fuel, the exhaust gas treatment device comprising:

a first denitration catalyst for reducing a nitrogen oxide in the exhaust gas; and
at least one catalyst unit each including an ammonia decomposition catalyst for decomposing ammonia in the exhaust gas, the ammonia decomposition catalyst being disposed downstream of the first denitration catalyst in an exhaust gas flow, and a second denitration catalyst for reducing the nitrogen oxide in the exhaust gas, the second denitration catalyst being disposed downstream of the ammonia decomposition catalyst in the exhaust gas flow, wherein
a length of the first denitration catalyst in a direction of the exhaust gas flow is configured to satisfy a relational expression expressed as

$$y \geq 0.003x,$$

where x [ppmvdc] is a nitrogen oxide concentration in the exhaust gas introduced into the exhaust gas treatment device, and y [-] is a ratio ($L_{FSCR}/L_{AmD}$) of the length $L_{FSCR}$ of the first denitration catalyst in the direction of the exhaust gas flow and a length $L_{AmD}$ of each ammonia decomposition catalyst.

6. An exhaust gas treatment method for treating exhaust gas generated by combusting fuel, the exhaust gas treatment method comprising:
a step of treating the exhaust gas using an exhaust gas treatment device, the exhaust gas treatment device comprising:

a first denitration catalyst for reducing a nitrogen oxide in the exhaust gas, and
at least one catalyst unit each including an ammonia decomposition catalyst for decomposing ammonia in the exhaust gas, the ammonia decomposition catalyst being disposed downstream of the first denitration catalyst in an exhaust gas flow, and a second denitration catalyst for reducing the nitrogen oxide in the exhaust gas, the second denitration catalyst being disposed downstream of the ammonia decomposition catalyst in the exhaust gas flow, wherein
in the step of treating, the exhaust gas is treated so that a ratio ($C_{NH3\_FSCR}/C_{N2O\_SYS}$) of an ammonia concentration ($C_{NH3\_FSCR}$) at an outlet of the first denitration catalyst to a dinitrogen monoxide concentration ($C_{N2O\_SYS}$) at an outlet of the at least one catalyst unit is not less than 10.0.

7. An exhaust gas treatment method for treating exhaust gas generated by combusting fuel, the exhaust gas treatment method comprising:

a step of treating the exhaust gas using an exhaust gas treatment device, the exhaust gas treatment device comprising:

a first denitration catalyst for reducing a nitrogen oxide in the exhaust gas; and

at least one catalyst unit each including an ammonia decomposition catalyst for decomposing ammonia in the exhaust gas, the ammonia decomposition catalyst being disposed downstream of the first denitration catalyst in an exhaust gas flow, and a second denitration catalyst for reducing the nitrogen oxide in the exhaust gas, the second denitration catalyst being disposed downstream of the ammonia decomposition catalyst in the exhaust gas flow, wherein

in the step of treating, the exhaust gas is treated by means of at least the first denitration catalyst satisfying a relational expression expressed as

$$y \geq 0.003x,$$

where x [ppmvdc] is a nitrogen oxide concentration in the exhaust gas introduced into the exhaust gas treatment device, and y [-] is a ratio ($L_{FSCR}/L_{AmD}$) of the length $L_{FSCR}$ of the first denitration catalyst in a direction of the exhaust gas flow and a length $L_{AmD}$ of each ammonia decomposition catalyst.

# FIG. 1

FIG. 2

Combustion exhaust gas

Discharge

EP 4 706 804 A1

FIG. 3

# FIG. 4

# FIG. 5

FIG. 6

# FIG. 7

## INTERNATIONAL SEARCH REPORT

| International application No. |
| --- |
| **PCT/JP2024/018966** |

### A. CLASSIFICATION OF SUBJECT MATTER

**B01D 53/86**(2006.01)i
FI:   B01D53/86 222; B01D53/86 228; B01D53/86 ZAB

According to International Patent Classification (IPC) or to both national classification and IPC

### B. FIELDS SEARCHED

Minimum documentation searched (classification system followed by classification symbols)

B01D53/86

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 8-38856 A (MITSUBISHI HEAVY INDUSTRIES, LTD.) 13 February 1996 (1996-02-13) claims, paragraphs [0020], [0021], fig. 1 | 5, 7 |
| A | | 1-4, 6 |
| X | JP 2000-93749 A (MITSUBISHI HEAVY INDUSTRIES, LTD.) 04 April 2000 (2000-04-04) claims, paragraphs [0022], [0024], fig. 1 | 5, 7 |
| A | | 1-4, 6 |
| X | JP 9-75674 A (THE KANSAI ELECTRIC POWER CO., INC.) 25 March 1997 (1997-03-25) claims, paragraph [0024], fig. 1, 3, 4 | 5, 7 |
| A | | 1-4, 6 |
| A | JP 2011-122552 A (SUZUKI KABUSHIKI KAISHA) 23 June 2011 (2011-06-23) | 1-7 |
| A | JP 8-141398 A (CATALYSTS & CHEM IND CO., LTD.) 04 June 1996 (1996-06-04) | 1-7 |
| A | JP 2023-26798 A (NIKKI UNIVERSAL CO., LTD.) 01 March 2023 (2023-03-01) | 1-7 |

☑ Further documents are listed in the continuation of Box C.     ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **26 July 2024** | **06 August 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**

International application No.

**PCT/JP2024/018966**

C. DOCUMENTS CONSIDERED TO BE RELEVANT

| Category* | Citation of document, with indication, where appropriate, of the relevant passages | Relevant to claim No. |
|---|---|---|
| A | JP 2008-255899 A (TOYOTA JIDOSHA KABUSHIKI KAISHA) 23 October 2008 (2008-10-23) | 1-7 |
| A | JP 2008-86884 A (SUD CHEMIE CATALYSTS INC.) 17 April 2008 (2008-04-17) | 1-7 |
| A | JP 2012-192338 A (NIPPON SHOKUBAI CO., LTD.) 11 October 2012 (2012-10-11) | 1-7 |

Form PCT/ISA/210 (second sheet) (July 2022)

**INTERNATIONAL SEARCH REPORT**
**Information on patent family members**

International application No.

**PCT/JP2024/018966**

| Patent document cited in search report | | | Publication date (day/month/year) | Patent family member(s) | | | Publication date (day/month/year) |
|---|---|---|---|---|---|---|---|
| JP | 8-38856 | A | 13 February 1996 | US | 5728356 | A | |
| | | | | column 5, lines 41-46, table 4, fig. 1, claims | | | |
| | | | | US | 6080376 | A | |
| | | | | EP | 694329 | A2 | |
| JP | 2000-93749 | A | 04 April 2000 | US | 6479026 | B1 | |
| | | | | figures, column 5, lines 41-53, claims | | | |
| | | | | EP | 988885 | A1 | |
| | | | | EP | 2100658 | A1 | |
| JP | 9-75674 | A | 25 March 1997 | (Family: none) | | | |
| JP | 2011-122552 | A | 23 June 2011 | (Family: none) | | | |
| JP | 8-141398 | A | 04 June 1996 | (Family: none) | | | |
| JP | 2023-26798 | A | 01 March 2023 | (Family: none) | | | |
| JP | 2008-255899 | A | 23 October 2008 | US | 2010/0281853 | A1 | |
| | | | | WO | 2008/126927 | A1 | |
| | | | | EP | 2143901 | A1 | |
| | | | | CN | 101646846 | A | |
| JP | 2008-86884 | A | 17 April 2008 | (Family: none) | | | |
| JP | 2012-192338 | A | 11 October 2012 | (Family: none) | | | |

Form PCT/ISA/210 (patent family annex) (July 2022)

**EP 4 706 804 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP P2023090194 B
- JP 3462580 B
- JP 2000093749 A